Europäisches Patentamt

European Patent Office

Office européen des brevets

(11) Veröffentlichungsnummer: **0 219 090**

**A2**

(12) # EUROPÄISCHE PATENTANMELDUNG

(21) Anmeldenummer: **86114176.0**

(22) Anmeldetag: **14.10.86**

(51) Int. Cl.⁴ **C08L 69/00 , C08L 25/12 , C08L 51/04 , C08L 55/02**

(30) Priorität: **18.10.85 DE 3537100**

(43) Veröffentlichungstag der Anmeldung:
**22.04.87 Patentblatt 87/17**

(84) Benannte Vertragsstaaten:
**BE DE FR GB NL**

(71) Anmelder: **BASF Aktiengesellschaft
Carl-Bosch-Strasse 38
D-6700 Ludwigshafen(DE)**

(72) Erfinder: **Wassmuth, Georg, Dr.
Von-Sturmfeder-Strasse 60
D-6700 Ludwigshafen(DE)**
Erfinder: **Ruppmich, Karl
Koenigsbacher Strasse 134
D-6700 Ludwigshafen(DE)**
Erfinder: **Mitulla, Konrad, Dr.
Schwalbenweg 31
D-6700 Ludwigshafen(DE)**
Erfinder: **Hambrecht, Jürgen, Dr.
Am Klosterwald 31
D-4400 Münster-Hiltrup(DE)**
Erfinder: **Jung, Rudolf H., Dr.
Wachenheimer Strasse 6d
D-6520 Worms 1(DE)**
Erfinder: **Benker, Klaus
Fürstenweg 52
D-6730 Neustadt(DE)**
Erfinder: **Siebel, Peter, Dr.
Trifelsring 20
D-6703 Limburgerhof(DE)**

(54) **Formmasse auf Basis von Polycarbonat, SAN-Copolymerisaten und einem Pfropfmischpolymerisat.**

(57) Die Erfindung betrifft eine thermoplastische Formmasse aus einem aromatischen Polycarbonat A, einem Copolymerisat B und einem Pfropfmischpolymerisat C. Das Copolymerisat B ist aufgebaut auf Basis von

$b_1$) 88 bis 73 Gew.% eines vinylaromatischen Monomeren aus der Gruppe von Styrol, $\alpha$-Methylstyrol, p-Methylstyrol oder Gemischen davon

und

$b_2$) 12 bis 27 Gew.% Acrylnitril.

Das Pfropfmischpolymerisat C weist eine mittlere Teilchengröße im Bereich von 80 bis 500 nm ($d_{50}$-Wert der integralen Masseverteilung) auf und besteht aus

$c_1$) 50 bis 90 Gew.% eines Elastomeren (Kautschuk)

und

$c_2$) 10 bis 50 Gew.% einer auf das Elastomere gepfropften Hülle, wobei das Elastomeres $c_1$) einpolymerisiert enthält

$c_{11}$ mindestens 80 Gew.% Butadien und
$c_{12}$ 0 bis 20 Gew.% Styrol und/oder Acrylnitril
und wobei die Hülle $c_2$, bezogen auf diese, aufweist
$c_{21}$ 90 bis 10 Gew.% Styrol und
$c_{22}$ 10 bis 90 Gew.% Methylmethacrylat.

Die Formmasse wird verwendet zur Herstellung von Formteilen.

## Formmasse auf Basis von Polycarbonat, SAN-Copolymerisaten und einem Pfropfmischpolymerisat

Die Erfindung betrifft eine thermoplastische Formmasse enthaltend

A Polycarbonat auf Basis von 2,2-Bis-(4-hydroxiphenyl)propan

B ein Copolymerisat auf Basis von

b₁) mindestens einem vinylaromatischen Monomeren aus der Gruppe von Styrol, α-Methylstyrol, p-Methylstyrol oder Gemischen davon und

b₂) Acrylnitril und

C ein Pfropfmischpolymerisat, das besteht aus einem Elastomeren (Kautschuk) und mindestens einer auf das Elastomere gepfropfte Hülle.

Zum Stand der Technik nennen wir:

(1) DE-PS 11 70 141 (US-PS 3 130 177)
(2) US-PS 3 162 695
(3) DE-PS 18 10 983
(4) DE-AS 22 64 104 (US-PS 3 852 394).

Aus (1) und (2) ist die Zugabe eines ABS-oder MBS-Pfropfkautschuks zu Polycarbonat(en) bekannt, wobei der Pfropfkautschuk durch Polymerisation von Styrol und Acrylnitril und/oder Styrol und Methylmethacrylat in Gegenwart eines überwiegend aus Polybutadien aufgebauten Kautschuks hergestellt wird.

In (3) wird eine Formmasse beansprucht, die neben Polycarbonat und Pfropfkautschuk eine zusätzliche SAN-Hartkomponente enthält, wobei diese zu 10 bis 40 % aus einem Acrylmonomeren und zu 90 bis 60 % aus aromatischer Vinylverbindung aufgebaut ist und letztere zu >50 % aus α-Methylstyrol besteht.

Aus (4) ist eine Formmasse bekannt, die aus einem Pfropfmischpolymerisat (A), einem thermoplastischen Copolymerisat (B) aus Vinylaromat und Vinylcyanid (Styrol und Acrylnitril) und Polycarbonat (C) besteht. Das Pfropfmischpolymerisat (A) ist als MBS-Kautschuk anzusprechen und besteht aus einem durch Pfropfpolymerisation von 90 bis 10 Teilen eines Monomergemisches aus 90 bis 10 Gew.% eines monomeren Methacrylsäureesters und 10 bis 90 Gew.% eines aromatischen Vinylmonomeren mit 10 bis 90 Gew.-Teilen eines Polybutadiens oder eines mindestens 50 Gew.% Butadieneinheiten enthaltenden Butadiencopolymerisats erhaltenen Pfropfcopolymerisat.

Das thermoplastische Copolymerisat (B) wird durch Copolymerisation eines aromatischen Vinylmonomeren mit 15 bis 70 Gew.%, bezogen auf das aromatische Monomere, eines Vinylcyanids erhalten. In den Ausführungsbeispielen wird ausschließlich ein Copolymerisat eingesetzt, das 29 % AN einpolymerisiert enthält.

Die bekannten Formmassen wiesen i.a. zufriedenstellende Eigenschaften auf. Häufig wird aber eine höhere Zähigkeit und eine bessere, homogenere Verteilung der Weichphase verlangt. Zusätzliche Anforderungen entstehen dadurch, daß immer größere Teile aus den Formmassen hergestellt werden, wobei immer höhere Verarbeitungstemperaturen erforderlich sind. Die bekannten Formmassen genügen nun häufig hinsichtlich gleichbleibender Eigenschaften bei erhöhter Verarbeitungstemperatur nicht den gestellten Anforderungen. Besonders die Kältezähigkeit zeigt mit zunehmender Verarbeitungstemperatur eine starke Abnahme der Meßwerte. Es bestand daher die Aufgabe, diese Nachteile zu beheben und Formmassen zu entwickeln, die eine gleichbleibende, von der Verarbeitungstemperatur weitgehend unabhängige Zähigkeit auch in der Kälte aufweisen.

Diese Aufgabe wird durch Formmassen gemäß Anspruch 1 gelöst.

Die Erfindung betrifft daher eine thermoplastische Formmasse enthaltend, jeweils bezogen auf die Formmasse aus A, B und C,

A) 10 bis 90 Gew.% mindestens eines Polycarbonats auf Basis von 2,2-Bis(4-hydroxiphenyl)-propan

B) 5 bis 50 Gew.% mindestens eines Copolymerisats auf Basis von

b₁) mindestens einem vinylaromatischen Monomeren aus der Gruppe von Styrol, α-Methylstyrol, p-Methylstyrol oder Gemischen davon und

b₂) Acrylnitril

C) 5 bis 50 Gew.% mindestens eines Pfropfmischpolymerisates das besteht aus, jeweils auf C,

c₁) 50 bis 90 Gew.% mindestens einem Elastomeren (Kautschuk) und

c₂) 10 bis 50 Gew.% mindestens einer auf das Elastomere gepfropften Hülle.

Die Formmasse ist dadurch gekennzeichnet, daß man als Copolymerisat B ein solches verwendet, das, bezogen auf B, 88 bis 73 Gew.% des vinylaromatischen Monomeren b₁ und 12 bis 27 Gew.% Acrylnitril (b₂) einpolymerisiert enthält und das Viskositätszahlen im Bereich von 50 bis 120 aufweist

und daß man ferner ein Pfropfmischpolymerisat C einer mittleren Teilchengröße im Bereich von 80 bis 500 nm (d₅₀-Wert der integralen Masseverteilung) verwendet, dessen Elastomeres c₁ einpolymerisiert enthält

c₁ mindestens 80 Gew.% Butadien und
c₂ 0 bis 20 Gew.% Styrol und/oder Acrylnitril und dessen Hülle c₂, bezogen auf diese, aufweist

$c_2$, 90 bis 10 Gew.% Styrol,

$c_{22}$ 10 bis 90 Gew.% Methylmethacrylat.

Nachstehend wird der Aufbau der erfindungsgemäßen Formmasse aus den Komponenten, die Herstellung letzterer, sowie die Herstellung der Formmasse beschrieben.

Die erfindungsgemäßen Formmasse enthält mindestens die Komponenten A, B und C. Vorzugsweise besteht sie aus diesen. Sie kann zusätzlich noch weitere Zusatzstoffe (Komponente D) enthalten.

Die Formmasse ist aufgebaut aus, jeweils bezogen auf A + B + C,

A: 10 bis 90 Gew.%, vorzugsweise 40 bis 70 Gew.%, insbesondere 45 bis 70 Gew.%

B: 90 bis 10 Gew.%, vorzugsweise 15 bis 30 Gew.%, insbesondere 15 bis 25 Gew.% und

C: 5 bis 50 Gew.%, vorzugsweise 10 bis 45 Gew.%, insbesondere 15 bis 30 Gew.%.

Bezogen auf 100 Gew.-Teile A + B + C, kann sie enthalten

D: 0,5 bis 50 Gew.-Teile, vorzugsweise 0,5 bis 25 Gew.-Teile Zusatzstoffe, wie Stabilisatoren, Flammschutzmittel, Farbpigmente u.ä.

## Komponente A

Die Polycarbonate (Komponente A) sind an sich bekannt.

Unter Polycarbonaten A im Sinne der erfindungsgemäßen Formmasse sollten Polycarbonate auf der Basis von Homopolycarbonaten und Copolycarbonaten verstanden werden. Als Bisphenole kommen dabei beispielsweise in Frage: Dihydroxydiphenyle, Bis-(hydroxyphenyl)alkane, Bis-(hydroxyphenyl)ether. Es können aber auch alle anderen, für die Herstellung von Polycarbonaten geeigneten Bisphenole eingesetzt werden, wie sie u.a. in der Monographie H. Schnell, Chemistry and Physics auf Polycarbonales, Interscience Publishers, New York, 1964, in der US-PS 2 99 835 und in der DE-OS 22 48 817 beschrieben sind. Besonders bevorzugt sind Polycarbonate auf der Basis von Bisphenol A, nämlich 2,2-Bis-(4-hydroxyphenyl)propan. Die Synthese der Polycarbonate wird beispielsweise in der US-PS 2 999 835 und der GB-PS 772 627 beschrieben. Die Komponente A weist relative Viskositäten $\eta_{spec}/c$ im Bereich von 1,1 bis 1,5 (ml/g) auf, entsprechend mittleren Molgewichten $\overline{M}_w$ im Bereich von 25.000 bis 200.000.

## Komponente B

Als Komponente B der erfindungsgemäßen Formmasse kommen Copolymerisate auf Basis von

$b_1$ mindestens einem vinylaromatischen Monomeren aus der Gruppe von Styrol, α-Methylstyrol, para-Methylstyrol oder Gemischen aus den genannten Monomeren in Frage. Zwar kann Styrol, um die Wärmeformbeständigkeit zu verbessern, ganz oder teilweise durch α-Methylstyrol oder kernalkyliertes Styrol, insbesondere para-Methylstyrol ersetzt werden, vorzugsweise wird jedoch Styrol ausschließlich angewendet.

Als Monomerenbaustein $b_2$ kommt ausschließlich Acrylnitril in Mengen von 12 bis 27 Gew.%, vorzugsweise 19 bis 25 Gew.% in Frage. Bei Anwendung von Acrylnitrilgehalten, die größer als 27 Gew.% betragen, nimmt die Zähigkeit der erfindungsgemäßen Formmasse in der Kälte ab. Bei Acrylnitrilgehalten von kleiner als 12 % des Copolymerisates B verschlechtert sich ebenfalls die Zähigkeit, und zwar die multiaxiale Schlagzähigkeit in der Kälte (bei -40°C).

Die bevorzugt anzuwendenden Styrol-Acrylnitrilcopolymerisate sind im Handel erhältlich und können z.B. nach der Lehre der DE-AS 10 01 001 bzw. DE-PS 10 03 436 hergestellt werden. Die Copolymerisate B sollen mittlere Molekulargewichte im Bereich $\overline{M}_w = 8 \bullet 10^4$ bis $\overline{M}_w$ $5 \bullet 10^5$ betragen (alternativ sollen Viskositätszahlen im Bereich von 50 bis 120, vorzugsweise im Bereich von 60 bis 100 aufweisen).

## Komponente C

Die Komponente C (Pfropfmischpolymerisat oder Weichphase) der erfindungsgemäßen Formmasse ist in der Mischung aus der Komponente A und der Komponente B, die als Hartmatrix fungieren, dispergiert, in Form von Teilchen im Bereich von 80 bis 500 nm (mittlere Teilchengröße), $d_{50}$-Wert der integralen Masseverteilung. Die Komponente C besteht aus zwei Teilen, nämlich C1 50 bis 90 Gew.%, vorzugsweise 50 bis 80 Gew.% und insbesondere 50 bis 75 Gew.%, bezogen auf C, aus mindestens einem Elastomeren (Kautschuk). Der zweite Bestandteil C2 ist eine auf das Elastomere gepfropfte Hülle C2, die 10 bis 50 Gew.%, vorzugsweise 20 bis 50 Gew.% und insbesondere 25 bis 50 Gew.%, jeweils bezogen auf C, ausmacht.

Das Elastomere ist vorzugsweise ein Homo- oder Copolymerisat des Butadiens bzw. besteht vorzugsweise aus ausschließlich Butadien, mindestens sollen jedoch 80 Gew.% Butadien als monomerem Baustein $C_{11}$ vorhanden sein. Als Comonomere $C_{12}$ können Styrol und/oder Acrylnitril verwendet werden. Diese werden in Mengen von bis zu 20 Gew.%, insbesondere 5 bis 15 Gew.% angewendet.

Die Herstellung des Elastomeren, das eine Einfriertemperatur, Tg, von weniger als 0°C, vorzugsweise von weniger als -50°C aufweist, kann nach dem in der DE-PS 12 60 135 beschriebenen Verfahren erfolgen. Grundsätzlich kann dieser Kautschuk nach dem Emulsions-, Lösungs-bzw. Massepolymerisationsverfahren hergestellt werden. Bevorzugt wird die Herstellung des Kautschuks in wäßriger Emulsion in an sich bekannter Weise. Die genauen Polymerisationsbedingungen, insbesondere Art, Dosierung und Menge des Emulgators werden vom Fachmann so gewählt, daß der erhaltene Latex des Polymerisates C1 einen $d_{50}$-Wert im Bereich von etwa 50 bis 500 nm, vorzugsweise im Bereich von 75 bis 400 nm besitzt. Wenn dies gewünscht wird, kann das Emulsionspolymerisat, das in der Regel mittlere Teilchengrößen im Bereich von 30 bis 80 nm aufweist, in bekannter Weise durch Agglomerieren, vergrößert werden - (vgl. DE-AS 24 27 960). Man kann jedoch den Kautschuk auch durch Saatlatex-Fahrweise herstellen, um den vom Fachmann gewählten Teilchengrößenbereich einzustellen. Der Fachmann weiß, welche der verschiedenen Methoden vom Stand der Technik am besten geeignet sind, um bei einer gestellten Aufgabe zum Ziele zu gelangen.

Die Pfropfhülle ist mindestens einstufig aufgebaut, d.h. man kann sowohl diese Pfropfhülle in einem ein-oder mehrstufigen, insbesondere zweistufigen Verfahren erzeugen. Unabhängig von der Art der Herstellung soll die Pfropfhülle als Monomere $C_{21}$ Styrol und als Monomere $C_{22}$ Methylmethacrylat obligatorisch aufweisen. Die Pfropfhülle kann ferner als Mono meres $C_{23}$ Acrylnitril und als Monomeres $C_{24}$ ein übliches, mindestens bifunktionelles Vernetzungsmittel aufweisen. Die Zusammensetzung der Pfropfhülle, bezogen auf die Pfropfhülle ist wie folgt:

$C_{21}$, 90 bis 10 Gew.%, vorzugsweise 60 bis 30 Gew.%

$C_{22}$ 10 bis 90 Gew.%, vorzugsweise 20 bis 80 Gew.%, insbesondere 25 bis 75 Gew.%

$C_{23}$ 0 bis 30 Gew.%, vorzugsweise 10 bis 25 Gew.% und

$C_{24}$ 0 bis 10 Gew.%, vorzugsweise 5 bis 9 Gew.%.

Als Monomeres $C_{21}$ wird ausschließlich Styrol, als Monomeres $C_{22}$ ausschließlich Methylmethacrylat und als Monomeres $C_{23}$ ausschließlich Acrylnitril angewendet. Als vernetzend wirkende Monomere - (Vernetzungsmittel) kommen übliche, mindestens bifunktionelle Monomere in Betracht. Es seien genannt: Butadiendioldiacrylat, Triallylcyanurat, Dicyclopentadienyldiacrylat, Divinylbenzol und dergleichen.

Aus den vorstehenden Angaben über die Zusammensetzung der Komponente C aus Pfropfgrundlage C1 und Pfropfhülle C2 errechnen sich Pfropfgrade im weitesten Sinne von 20 bis 50 %. Vorzugsweise werden Pfropfgrade von 25 bis 50 % angewendet. Unter Pfropfgrad im Sinne der vorliegenden Erfindung soll verstanden werden Gewichtsteil Pfropfmonomere zu Summe Gewichtsteile - (Pfropfgrundlage + Pfropfmonomere). Die Herstellung des Pfropfmischpolymerisates ist dem Fachmann bekannt. Vorzugsweise wird sie, falls die Pfropfgrundlage ebenfalls in Emulsion durchgeführt worden ist, ebenfalls in Emulsion, in Gegenwart des Latex des Elastomeren C1 hergestellt. Die Pfropfhülle kann ein-oder zweistufig aufgebaut werden. Falls die Pfropfhülle C2 des Pfropfmischpolymerisates C in zwei Verfahrensschritten hergestellt wird, werden im ersten Verfahrensschritt nur die Monomeren $C_{21}$ oder Mischungen der Monomeren $C_{21}$ und $C_{22}$, gegebenenfalls zusammen mit Monomeren der Sorte $C_{23}$ oder $C_{24}$ vorgelegt, polymerisiert und anschließend in einem weiteren Verfahrensschritt ausschießlich das Monomere $C_{22}$ auf-bzw. anpolymerisiert, d.h. bei mehrstufigem Aufbau, besteht die zweite Hülle des Pfropfmischpolymerisates ausschießlich aus Methylmethacrylat. Das Pfropfmischpolymerisat C soll nach der Pfropfung mittlere Teilchengrößen von 80 bis 500 nm ($d_{50}$-Wert) der integralen Masseverteilung, insbesondere von 80 bis 400 nm besitzen. Die Bedingungen der Pfropfmischpolymerisation sind bei gegebener Vorlage des Latex, d.h. der Pfropfgrundlage so zu wählen, daß Teilchengrößen in diesem Bereich resultieren. Maßnahmen hierzu sind dem Fachmann bekannt und z.B. in der DE-PS 12 60 135, der DE-OS 28 26 925 sowie in Journ. of Appl. Science, Vol. 9 (1965), Seiten 2929 bis 2938 beschrieben. Bei der Herstellung der Pfropfmischpolymerisates entsteht, je nach den Bedingungen, ein geringer Anteil an nicht-gepfropften, nicht-elastomeren Hartkomponenten der Zusammensetzung der Pfropfhülle. Diese freien, nicht-gepfropften Copolymerisate werden rein rechnerisch nicht zu dem Bestandteil C gerechnet, sie finden sich wieder in der Mischung der Komponente A und B und bilden zusammen mit diesen die Hartmatrix der erfindungsgemäßen Formmasse.

Komponente D

Die erfindungsgemäße Formmasse kann als Komponente D Zusatzstoffe enthalten, die für Polycarbonate, SAN-Polymerisate und Pfropfmischpolymerisate oder deren Mischungen typisch und gebräuchlich sind. Als solche Zusatzstoffe seien beispielsweise genannt: Füllstoffe, Farbstoffe, Pigmente, Antistatika, Antioxidantien, auch Flammschutzmittel und insbesondere die Schmiermittel, die für die Weiterverarbeitung der Formmasse, z.B.

bei der Herstellung von Formkörpern bzw. Formteilen erforderlich sind. Von den Schmiermitteln sind insbesondere diejenigen auf Basis von Ethylen- und Propylenoxid aufgebauten Pluriole® zu nennen, die bevorzugt angewendet werden, um die Verarbeitungseigenschaft der Formmassen auf einem hohen Niveau zu halten.

### Herstellung der Formmasse

Das Mischen der Komponenten A, B, C und gegebenenfalls D kann nach allen bekannten Methoden erfolgen. Vorzugsweise geschieht jedoch das Mischen der Komponenten A, B und C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltenen Produkte der Pfropfmischpolymerisation [Komponente C] können aber auch teilweise entwässert oder direkt als Dispersion mit der Komponente $b_3$) und dann mit den Polycarbonat A, und der Komponente D, vermischt werden, wobei dann während des Vermischens die vollständige Trocknung des Pfropfmischpolymerisates erfolgt.

Die Herstellung der Formmasse erfolgt z.B. dadurch, daß eine Schmelze der harten Polymerisate, Komponente A und Komponente B mit dem Pfropfmischpolymerisat C bei Temperaturen über 200°C intensiv vermischt wird. Sie erfolgt, um eine besonders homogene Verteilung der Weichphase in der Hartmatrix zu erzielen, bevorzugt dadurch, daß man in die Schmelze der Polycarbonate - [Komponente A], z.B. in einem Extruder das gefällte Pfropfmischpolymerisat C, das einen Restwassergehalt von 10 bis 40 Gew.% aufweist, bei Temperaturen über 180°C einbringt und intensiv vermischt. Man kann auch die Schmelze direkt mit einer Dispersion des Pfropfmischpoly merisates, die einen Feststoffgehalt von 30 bis 60 Gew.%

aufweist, bei Temperaturen über 180°C intensiv vermischen.

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen oder Sintern; besonders bevorzugt werden aus den nach dem erfindungsgemäßen Verfahren hergestellten Formmassen Formteile durch Spritzgießen für den Automobilbau hergestellt.

Die in der vorliegenden Anmeldung beschriebenen Parameter können wie folgt bestimmt werden:

1. die mittlere Teilchengröße und die Teilchengrößenverteilung wurde aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 82 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.% der Teilchen einen kleineren Durchmesser haben als der Durchmesser, der dem $d_{50}$-Wert entspricht. Ebenso haben dann 50 Gew.% der Teilchen einen größeren Durchmesser als der $d_{50}$-Wert. Zur Charakterisierung der Breite der Teilchengrößenverteilung der Kautschukteilchen können neben dem $d_{50}$-Wert (mittlerer Teilchendurchmesser) die sich aus der integralen Massenverteilung ergebenden $d_{10}$-und $d_{90}$-Werte herangezogen werden. Der $d_{10}$-bzw. $d_{90}$-Wert der integralen Massenverteilung ist dabei entsprechend dem $d_{50}$-Wert definiert mit dem Unterschied, daß sie auf 10 bzw. 90 Gew.% der Teilchen bezogen sind. Der Quotient

$$\frac{d_{90} - d_{10}}{d_{50}} = Q$$

stellt ein Maß für die Verteilungsbreite der Teilchengröße dar.

2. Die Kerbschlagzähigkeit $a_k$ in [kJ/m²] der Proben wurde nach DIN 53 453 an bei verschiedenen Massetemperaturen gespritzten Normkleinstäben bei 23°C und -40°C gemessen.

3. Die Bruchenergie $W_{50}$ [Nm] wurde bei -40°C gemäß DIN 53 443 an ebenfalls bei verschiedenen Massetemperaturen gespritzten Normkleinstäben gemessen.

4. a) Die Viskositätszahl (VZ) des eingesetzten Polycarbonats wurde in einer 0,5 %igen Lösung in Methylenchlorid bei 23°C gemessen;

b) die der SAN-Copolymerisate in 0,5 %iger Lösung in Dimethylformamid bei 23°C.

Die Erfindung wird durch die nachfolgenden Beispiele näher erläutert. Die in den Beispielen genannten Teile und Prozente beziehen sich, sofern nicht anders angegeben, auf das Gewicht.

### Komponente A1 und A2

Als Komponente A wurden handelsübliche Polycarbonate auf Basis von Bis-phenol A, Lexan®, mit einer relativen Viskosität (gemessen in 0,5 %iger Lösung in Methylenchlorid) von 1,30 ml/g (A-1) bzw. von 1,33 m/g (A-2) eingesetzt.

### Komponenten B1 bis B10

Als Komponente B wurden verschiedene durch Lösungspoloymerisation hergestellte SAN-Polymerisate gemäß Tabelle 1 eingesetzt.

### Tabelle 1

| Komponente B | B-1 | B-2 | B-3 | B-4 | B-5 | B-6 | B-7 | B-8 | B-9 | B-10 |
|---|---|---|---|---|---|---|---|---|---|---|
| An-Gehalt (%) | 25 | 27 | 30 | 35 | 35 | 20 | 20 | 20 | 18 | 10 |
| VZ (ml/g)* | 78 | 70 | 61 | 58 | 80 | 100 | 70 | 55 | 100 | 72 |

\* Viskositätszahl $\eta_{sp}/c$ in cm³/g gemessen in 0,5 %iger Lösung in Dimethylformamid.

### Komponente C (Tabelle 2)

Als Komponente C wurden die in Tabelle 2 aufgeführten Pfropfmischpolymerisate C-1 bis C-17 eingesetzt. Diese wurden wie folgt hergestellt:

Die Polybutadiengrundstufe aus 100 Teile Bu bzw. die überwiegend aus PBu bestehende Dispersion aus 90 Bu/10 S wurden in wäßriger Emulsion in Gegenwart von 0,4 Teilen $K_2S_2O_8$, 1,0 Teilen t-Dodecylmercaptan sowie 1,0 Teilen Kaliumstearat als Emulgator und 0,3 Teilen Natriumpyrophosphat in 150 Teilen $H_2O$ bis zu praktisch vollständigem Umsatz polymerisiert. Nach Beendigung der Polymerisation wurde entspannt. Der Umsatz betrug 98 %.

Es wurde ein Latex mit einer mittleren Teilchengröße $d_{50}$ <100 nm erhalten. Dieser Latex wurde entweder als solcher für die Pfropfung weiter verwendet oder vor der Pfropfung durch Zusatz von 25 Teilen einer 10 %igen Copolymerisat-Dispersion aus 96 Ethylenacrylat/4 MAM agglomeriert, wobei ein PBu-Latex resultierte, der eine bimodale TGV aufwies und dessen $d_{50}$-Wert 175 nm betrug.

Von diesen Pfropfgrundlagen wurde eine solche Menge mit einem Teil Pfropfmonomeren und einer weiteren Menge Wasser vermischt, daß einmal der angegebene Pfropfgrad (PG) gemäß der hier verwendeten Definition PG = Teile Pfropfmonomere/Σ (Teile Pfropfmonomere + Teile Kautschukgrundlage), wobei sich der Nenner stets auf 100 Teile stellt, resultiert und zum anderen ein Endfeststoffgehalt von 40 % der Pfropfdispersion erreicht wurde.

Zum Initiieren der Pfropfung wurde ein Teil der berechneten Menge der Pfropfmonomeren (~1/6) sowie 0,2 Teile (auf die Pfropfmonomeren bezogen) $K_2S_2O_8$ als Initiator zugesetzt. Die Pfropfung wurde bei 65°C durchgeführt, wobei der restliche Teil der Pfropfmonomeren innerhalb 4 Stunden zugegeben wurde. Bei zweistufiger Pfropfung wurden die Monomeren der 1. und die 2. Stufe in ebenfalls insgesamt 4 Stunden zugefahren, die Zulaufzeiten der einzelnen Stufen wurden ihrem Mengenverhältnis angepaßt. Zwischen Stufe 1 und Stufe 2 wurde keine Pause im Zulauf eingelegt.

Nach Beendigung des Zulaufs wurde noch 2 bis 3 Stunden bei 70°C zur Vervollständigung der Umsetzung weiterpolymerisiert. Das Pfropfprodukt wurde mittels Eingießen in 95°C heiße 2 %ige $CaCl_2$-Lösung ausgefällt, mit Wasser gewaschen, durch Zentrifugation von der Hauptmenge Wasser befreit und getrocknet.

### Beispiele und Vergleichsversuche

Die in der Tabelle 3 angegebenen Gewichtsteile der Komponente A bis C und gegebenenfalls Zusatzstoffe D (als Komponente D1 wurde Pluriol DE 3100 eingesetzt, als D2 Pluriol PE 6200) wurden in trockener Form gemischt und auf einem Zweischneckenextruder des Typs ZSK bei 260°C extrudiert und granuliert. Aus dem nachgetrockneten Granulat wurden Prüfkörper bei den in der Tabelle 4 mit aufgeführten Massetemperaturen KT von 240, 260 bzw. 280°C gespritzt, die für die Messung der Prüfwerte eingesetzt wuren.

Tabelle 2: Pfropfmischpolymerisate

| Komp. C | Pfropfgrundlage | | Pfropfgrad | Pfropfmonomere | |
|---|---|---|---|---|---|
| | Monomere | $d_{50}$ (nm) | % | 1. Stufe | 2. Stufe |
| C-1 | 100 Bu | 180 | 40 | 40 SAN (70:30) | - |
| C-2 | 100 Bu | 180 | 40 | 30 SAN (70:30) | 10 MMA |
| C-3 | 100 Bu | 180 | 50 | 30 SAN (70:30) | 20 MMA |
| C-4 | 100 Bu | 95 | 40 | 30 SAN (70:30) | 10 MMA |
| C-5 | 100 Bu | 95 | 50 | 30 SAN (70:30) | 20 MMA |
| C-6 | 90 Bu | 90 | 30 | 30 SAN (70:30) | - |
| C-7 | 90 Bu/10 S | 90 | 30 | 10 S/20 MMA | - |
| C-8 | 90 Bu/10 S | 90 | 30 | 10 S/10 MMA30) | 10 MMA |
| C-9 | 90 Bu/10 S | 90 | 30 | 10 S | 20 MMA |
| C-10 | 100 Bu | 95 | 30 | 10 S | 20 MMA |
| C-11 | 100 Bu | 95 | 30 | 10 S/20 MMA | - |
| C-12 | 100 Bu | 95 | 30 | 10 S/10 MMA | 10 MMA |
| C-13 | 100 Bu | 175 | 30 | 10 S/10 MMA | 10 MMA |
| C-14 | 100 Bu | 175 | 25 | 8 S | 17 MMA |
| C-15 | 100 Bu | 175 | 30 | 10 S | 20 MMA |
| C-16 | 100 Bu | 95 | 30 | 10 S/8 MMA/2 TAC | 10 MMA |
| C-17 | 100 Bu | 95 | 30 | 10 S/8 MMA/2 BDA2 | 10 MMA |

$$1) \quad \text{Pfropfgrad} = \frac{\text{Gew.-Teile Pfropfmonomere}}{\text{Gew.-Teile (Pfropfgrundlage + Pfropfmonomere}}$$

S       = Styrol
AN      = Acrylnitril
MMA     = Methylmethacrylat
TAC     = Triallylcyanurat
BDA2    = Butandioldiacrylat (1.3)

**Tabelle 3**: Formmassen

| Versuch | 1 | 2 | 3 | 4 | A | B | C | D | E | 5 | 6 | 7 | 8 |
|---|---|---|---|---|---|---|---|---|---|---|---|---|---|
| Komp. A | A-2 | A-2 | A-2 | A-2 | A-2 | A-2 | A-2 | A-2 | A-2 | A-1 | A-1 | A-1 | A-1 |
| Teile | 60 | 60 | 60 | 60 | 60 | 60 | 60 | 60 | 60 | 60 | 60 | 60 | 60 |
| Komp. B | B-6 | B-6 | B-6 | B-6 | B-6 | B-5 | B-5 | B-5 | B-5 | B-6 | B-7 | B-6 | B-7 |
| Teile | 24 | 24 | 24 | 24 | 24 | 25 | 24 | 24 | 24 | 20 | 20 | 20 | 20 |
| Komp. C | C-2 | C-2 | C-4 | C-5 | C-1 | C-2 | C-3 | C-4 | C-5 | C-2 | C-2 | C-3 | C-3 |
| Teile | 16 | 16 | 16 | 16 | 16 | 15 | 16 | 16 | 16 | 20 | 20 | 20 | 20 |
| Komp. D | D-1 | D-1 | D-1 | D-1 | D-1 | D-1 | D-1 | D-1 | D-1 | D-2 | D-2 | D-2 | D-2 |
| Teile | 0,5 | 0,5 | 0,5 | 0,5 | 0,5 | 0,5 | 0,5 | 0,5 | 0,5 | 0,5 | 0,5 | 0,5 | 0,5 |

0 219 090

0 219 090

Tabelle 3: Formmassen (Fortsetzung 1)

| Versuch | F | G | 9 | 10 | 11 | 12* | 13* | 14 | 15 | 16 | H |
|---|---|---|---|---|---|---|---|---|---|---|---|
| Komp. A | A-1 | A-1 | A-2 | → | → | → | → | A-1 | → | → | → |
| Teile | 60 | 60 | 60 | → | → | → | → | 60 | → | → | → |
| Komp. B | B-6 | B-7 | B-6 | B-1 | B-2 | B-3 | B-5 | B-6 | → | → | → |
| Teile | 20 | 20 | 20 | → | → | → | → | 18 | → | → | → |
| Komp. C | C-1 | C-1 | C-9 | → | → | → | → | C-7 | C-8 | C-9 | C-6 |
| Teile | 20 | 20 | 20 | → | → | → | → | 22 | → | → | → |
| Komp. D | D-2 | D-2 | – | – | – | – | – | – | – | – | – |
| Teile | 0,5 | 0,5 | – | – | – | – | – | – | – | – | – |

* nicht erfindungsgemäß

Tabelle 3: Formmassen (Fortsetzung 2)

| Versuch | 17 | 18 | 19 | 20 | 21 | 22 | 23 | 24 | 25 |
|---|---|---|---|---|---|---|---|---|---|
| Komp. A | A-1 | → | | A-1 | → | | A-2 | → | |
| Teile | 60 | → | | 60 | → | | 60 | → | |
| Komp. B | B-6 | → | | B-6 | B-6 | B-1 | B-7 | B-6 | B-6 |
| Teile | 20 | → | | 18 | → | | 20 | 20 | 18 |
| Komp. C | C-10 | C-11 | C-12 | C-14 | C-13 | C-13 | C-15 | C-16 | C-17 |
| Teile | 20 | 20 | 20 | 22 | → | | 20 | 22 | 22 |
| Komp. D | – | – | – | D-1 | → | | D-1 | → | |
| Teile | – | – | – | 0,5 | → | | 0,5 | → | |

Tabelle 4 Prüfergebnisse

| Versuch | $\alpha_K$ (RT) | | | $\alpha_K$ (-40°C) | | | $W_{50}$ (-40°C) | | |
|---|---|---|---|---|---|---|---|---|---|
| KT = | 240°C | 260°C | 280°C | 240°C | 260°C | 280°C | 240°C | 260°C | 280°C |
| 1 | 34,6 | 28,5 | 24,8 | 23,6 | 18,0 | 13,1 | 42,1 | 44,1 | 30,9 |
| 2 | 30,6 | 29,7 | 26,7 | 19,6 | 19,6 | 16,9 | 21,2 | 26,5 | 26,5 |
| 3 | 44,4 | 39,8 | 36,5 | 21,2 | 19,0 | 17,7 | 44,7 | 47,6 | 44,7 |
| 4 | 39,5 | 36,2 | 37,4 | 18,5 | 18,4 | 18,2 | 41,6 | 44,7 | 45,1 |
| 5 | 55,8 | 40,5 | 37,1 | 34,8 | 28,1 | 26,7 | 35,6 | 37,5 | 41,5 |
| 6 | 63,1 | 50,9 | 43,8 | 30,1 | 31,5 | 25,9 | 37,2 | 39,2 | 33,2 |
| 7 | 45,1 | 37,7 | 34,6 | 33,7 | 26,7 | 25,7 | 32,7 | 44,1 | 39,8 |
| 8 | 47,5 | 41,4 | 34,9 | 34,0 | 35,8 | 24,3 | 36,4 | 43,1 | 38,9 |
| 9 | 47,3 | 42,5 | 37,6 | 27,7 | 26,0 | 20,0 | 38,3 | 35,1 | 29,2 |
| 10 | 39,7 | 35,1 | 32,1 | 25,1 | 22,2 | 18,8 | 30,6 | 27,9 | 22,7 |
| 11 | 38,3 | 33,7 | 27,6 | 27,5 | 22,4 | 14,4 | 34,3 | 30,0 | 20,7 |
| 12* | 30,9 | 25,0 | 23,9 | 7,0 | 3,9 | 2,5 | 32,5 | 2,7 | 0,3 |
| 13* | 39,4 | 34,8 | 32,6 | 17,5 | 7,7 | 4,1 | 31,1 | 36,7 | 26,9 |
| 14 | 35,8 | 33,5 | 29,3 | 26,9 | 24,6 | 22,1 | 32,7 | 28,8 | 28,4 |
| 15 | 35,2 | 32,2 | 30,0 | 25,9 | 23,7 | 21,2 | 31,4 | 27,5 | 28,6 |
| 16 | 37,5 | 33,8 | 27,3 | 25,2 | 23,7 | 16,5 | 26,2 | 27,5 | 27,2 |
| 17 | 38,3 | 35,6 | 32,5 | 30,8 | 27,3 | 25,9 | 31,4 | 34,0 | 31,4 |
| 18 | 44,7 | 37,4 | 34,0 | 37,4 | 30,9 | 28,6 | 33,5 | 35,3 | 29,5 |
| 19 | 45,7 | 38,3 | 34,6 | 37,1 | 30,7 | 27,5 | 21,6 | 30,0 | 34,0 |
| 20 | 44,1 | 39,8 | 36,2 | 35,6 | 32,5 | 27,9 | 41,0 | 42,9 | 48,5 |

* Vergleichsproben

0 219 090

Tabelle 4 Prüfergebnisse (2)

| Versuch | $\alpha_K$ (RT) | | | $\alpha_K$ (-40°C) | | | $W_{50}$ (-40°C) | | |
|---------|-------|-------|-------|-------|-------|-------|-------|-------|-------|
| KT = | 240°C | 260°C | 280°C | 240°C | 260°C | 280°C | 240°C | 260°C | 280°C |
| 21 | 49,0 | 38,3 | 34,6 | 45,1 | 31,0 | 27,3 | 37,1 | 46,6 | 43,0 |
| 22 | 45,7 | 39,8 | 35,2 | 38,6 | 43,8 | 31,0 | 41,4 | 49,2 | 51,5 |
| 23 | 52,1 | 50,3 | 42,6 | 36,8 | 39,5 | 34,9 | 39,2 | 39,7 | 38,2 |
| 24 | 50,6 | 42,3 | 37,4 | 33,4 | 34,1 | 30,3 | 34,3 | 42,5 | 30,0 |
| 25 | 49,3 | 39,5 | 29,1 | 36,8 | 31,3 | 29,7 | 32,7 | 40,5 | 38,7 |
| A | 29,4 | 27,6 | 26,4 | 14,9 | 15,3 | 14,5 | 31,6 | 38,4 | 18,7 |
| B | 45,4 | 37,1 | 23,6 | 7,1 | 6,7 | 3,7 | 32,9 | 39,2 | 8,9 |
| C | 44,4 | 36,2 | 31,0 | 9,4 | 16,1 | 9,3 | 27,6 | 50,7 | 40,1 |
| D | 63,4 | 57,9 | 45,4 | 6,6 | 8,9 | 10,0 | 10,9 | 16,6 | 46,0 |
| E | 48,7 | 35,6 | 36,5 | 7,7 | 12,8 | 21,5 | 15,3 | 27,9 | 38,1 |
| F | 69,6 | 49,7 | 39,2 | 10,9 | 29,5 | 22,1 | 10,2 | 7,4 | 2,2 |
| G | 73,5 | 57,9 | 48,1 | 14,3 | 28,7 | 15,1 | 9,6 | 9,0 | 3,5 |
| H | 24,2 | 23,4 | 19,1 | 15,9 | 13,6 | 4,4 | 8,8 | 9,0 | 1,5 |

**Ansprüche**

1. Thermoplastische Formmasse enthaltend, jeweils bezogen auf die Formmasse aus A, B und C,

A 10 bis 90 Gew.% mindestens eines aromatischen Polycarbonats,

B 5 bis 40 Gew.% mindestens eines Copolymerisates auf Basis von

$b_1$) mindestens einem vinylaromatischen Monomeren aus der Gruppe von Styrol, $\alpha$-Methylstyrol, p-Methylstyrol oder Gemischen davon und

$b_2$) Acrylnitril

C 5 bis 50 Gew.% mindestens eines Pfropfmischpolymerisates, das besteht aus, jeweils bezogen auf C

$c_1$) 50 bis 90 Gew.% mindestens einem Elastomeren (Kautschuk) und

$c_2$) 10 bis 50 Gew.% mindestens einer auf das Elastomere gepfropften Hülle,

dadurch gekennzeichnet, daß man als Copolymerisate B ein solches verwendet, das, bezogen auf B,

88 bis 73 Gew.% des vinylaromatischen Monomeren $b_1$) und

12 bis 27 Gew.% Acrylnitril $b_2$) einpolymerisiert enthält und das Vis kositätszahlen im Bereich von 50 bis 120 aufweist

und daß man ferner ein Pfropfmischpolymerisat C einer mittleren Teilchengröße im Bereich von 80 bis 500 nm ($d_{50}$-Wert der integralen Masseverteilung) verwendet, dessen Elastomeres $c_1$) einpolymerisiert enthält

$C_{11}$ mindestens 80 Gew.% Butadien und

$C_{12}$ 0 bis 20 Gew.% Styrol und/oder Acrylnitril

und dessen Hülle $c_2$, bezogen auf diese, aufweist

$c_{21}$ 90 bis 10 Gew.% Styrol

$c_{22}$ 10 bis 90 Gew.% Methylmethacrylat.

2. Thermoplastische Formmasse nach Anspruch 1, dadurch gekennzeichnet, daß sie aus den Komponenten A, B und C besteht.

3. Thermoplastische Formmasse nach Anspruch 1, dadurch gekennzeichnet, daß sie bezogen auf 100 Gew.Teile A + B + C, zusätzlich 1 bis 50 Gew.-Teile einer Komponente D aufweist.

4. Thermoplastische Formmasse nach Anspruch 1, dadurch gekennzeichnet , daß die Pfropfhülle $c_2$ des Pfropfmischpolymerisates C zusätzlich Acrylnitril als Monomeres $c_{23}$ enthält.

5. Thermoplastische Formmasse nach Anspruch 4, dadurch gekennzeichnet, daß die Pfropfhülle $c_2$ außerdem vernetzend wirkende Monomere $c_{24}$ aufweist.

6. Thermoplastische Formmasse nach Anpruch 1, dadurch gekennzeichnet, daß die Pfropfhülle $c_2$ des Pfropfmischpolymerisates C in 2 Verfahrensschritten hergestellt wird, wobei im 1. Verfahrensschritt nur die Monomere $c_{21}$ oder Mischungen von Monomeren $c_{21}$ und $c_{22}$ gegebenenfalls zusammen mit $c_{23}$ oder $c_{24}$ angewendet werden und im 2. Verfahrensschritt ausschießlich das Monomere $c_{22}$ aufpolymerisiert wird.

7. Thermoplastische Formmasse enthaltend, jeweils bezogen auf die Formmasse aus A, B und C,

A 40 bis 70 Gew.% mindestens eines aromatischen Polycarbonats,

B 15 bis 30 Gew.% mindestens eines Copolymerisates auf Basis von

$b_1$) mindestens einem vinylaromatischen Monomeren aus der Gruppe von Styrol, $\alpha$-Methylstyrol, p-Methylstyrol oder Gemischen davon und

$b_2$) Acrylnitril

C 10 bis 45 Gew.% mindestens eines Pfropfmischpolymerisates, das besteht aus, jeweils bezogen auf C

$c_1$) 50 bis 80 Gew.% mindestens einem Elastomeren (Kautschuk) und

$c_2$) 20 bis 50 Gew.% mindestens einer auf das Elastomere gepfropften Hülle,

dadurch gekennzeichnet, daß man als Copolymerisate B ein solches verwendet, das, bezogen auf B,

88 bis 73 Gew.% des vinylaromatischen Monomeren $b_1$) und

12 bis 27 Gew.% Acrylnitril $b_2$) einpolymerisiert enthält und das Vis kositätszahlen im Bereich von 50 bis 120 aufweist

und daß man ferner ein Pfropfmischpolymerisat C einer mittleren Teilchengröße im Bereich von 80 bis 500 nm ($d_{50}$-Wert der integralen Masseverteilung) verwendet, dessen Elastomeres $c_1$) einpolymerisiert enthält

$C_{11}$ mindestens 80 Gew.% Butadien und

$C_{12}$ 0 bis 20 Gew.% Styrol und/oder Acrylnitril

und dessen Hülle $c_2$, bezogen auf diese, aufweist

$c_{21}$ 60 bis 30 Gew.% Styrol

$c_{22}$ 20 bis 80 Gew.% Methylmethacrylat und

$c_{23}$ 0 bis 30 Gew.% Acrylnitril, sowie

$c_{24}$ 0 bis 10 Gew.% eines Vernetzungsmittels.

8. Thermoplastische Formmasse enthaltend, jeweils bezogen auf die Formmasse aus A, B und C,

A 45 bis 70 Gew.% mindestens eines aromatischen Polycarbonats,

B 15 bis 25 Gew% mindestens eines Copolymerisates auf Basis von

b₁) Styrol und

b₂) Acrylnitril

C 15 bis 30 Gew.% mindestens eines Pfropfmischpolymerisates, das besteht aus, jeweils bezogen auf C

c₁) 50 bis 75 Gew.% mindestens einem Elastomeren (Kautschuk) und

c₂) 25 bis 50 Gew.% mindestens einer auf das Elastomere gepfropften Hülle,

dadurch gekennzeichnet, daß man als Copolymerisate B ein solches verwendet, das, bezogen auf B,

88 bis 73 Gew.% Styrol als vinylaromatischen Monomeren b₁) und

12 bis 27 Gew.% Acrylnitril b₂) einpolymerisiert enthält und das Vis kositätszahlen im Bereich von 60 bis 100 aufweist

und daß man ferner ein Pfropfmischpolymerisat C einer mittleren Teilchengröße im Bereich von 80 bis 500 nm (d₅₀-Wert der integralen Masseverteilung) verwendet, dessen Elastomeres c₁) einpolymerisiert enthält

C₁₁ ausschließlich Butadien oder mindestens 80 Gew.% Butadien und

C₁₂ 10 bis 20 Gew.% Styrol

und dessen Hülle c₂, bezogen auf diese, aufweist

c₂₁ 60 bis 30 Gew.% Styrol

c₂₂ 25 bis 75 Gew.% Methylmethacrylat und

c₂₃ 10 bis 25 Gew.% Acrylnitril, sowie

c₂₄ 5 bis 9 Gew.% eines Vernetzungsmittels.

9. Verwendung von Formmassen gemäß Anspruch 1 zur Herstellung von Formteilen.

10. Formteile aus Formmassen gemäß Anspruch 1.